# EUROPÄISCHE PATENTSCHRIFT

(11) **EP 3 946 991 B1**
(45) Veröffentlichungstag und Bekanntmachung des Hinweises auf die Patenterteilung: **17.06.2026**
(21) Anmeldenummer: 20716712.3
(22) Anmeldetag: 24.03.2020
(51) Int. Cl.: B60H 1/34, F24F 13/14

(54) **KOPPLUNGSANORDNUNG ZWISCHEN EINEM LUFTLEITELEMENT UND EINER ANTRIEBSEINRICHTUNG UND LUFTAUSSTRÖMER MIT EINER LAMELLENANORDNUNG**
COUPLING ARRANGEMENT BETWEEN AN AIR-GUIDING ELEMENT AND A DRIVE DEVICE, AND AIR VENT HAVING A LAMELLA ARRANGEMENT
DISPOSITIF DE COUPLAGE ENTRE UN ÉLÉMENT DE GUIDAGE D'AIR ET UN DISPOSITIF D'ENTRAÎNEMENT, ET DIFFUSEUR D'AIR DOTÉ D'UN ENSEMBLE DE LAMELLES

(30) Priorität: 04.04.2019 DE 102019108801
(43) Veröffentlichungstag der Anmeldung: 09.02.2022
(73) Patentinhaber: Motherson DRSC Deutschland GmbH, 96317 Kronach (DE)
(72) Erfinder: MÖCKEL, Tobias, 96224 Burgkunstadt (DE); KAMM, Daniel, 96264 Altenkunstadt (DE)
(74) Vertreter: Isarpatent
(86) Internationale Anmeldenummer: PCT/EP2020/058177
(87) Internationale Veröffentlichungsnummer: WO 2020/200922

(56) Entgegenhaltungen:
- EP-A1- 1 086 838
- EP-A1- 3 299 198
- DE-U1- 202005 004 128
- NL-C2- 2 011 079

## Beschreibung

Es werden eine Kopplungsanordnung zwischen einem Luftleitelement und einer Antriebseinrichtung, mindestens aufweisend ein Luftleitelement und mindestens einen Hebel, und ein Luftausströmer mit einer Lamellenanordnung mindestens zur Luftablenkung beschrieben, wobei die Lamellenanordnung mehrere Lamellen als Luftleitelemente aufweist, die um parallele Schwenkachse verschwenkbar in einem Gehäuse des Luftausströmers gelagert sind. Der Luftausströmer kann so ausgebildet sein, dass zusätzlich eine Luftmengenregulierung über die Lamellenanordnung erzielbar ist.

### Hintergrund

Luftausströmer dienen zur Ablenkung von ausgegebener Luft, die von einer Klimaanlage oder einer anderen Belüftungseinrichtung zur Verfügung gestellt wird. Luftausströmer werden bei Fahrzeugen eingesetzt, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden.

Luftausströmer können bspw. in einem Fahrzeugarmaturenbrett oder im Bereich der A-, B- oder C- Säule oder am Dach eines Kraftfahrzeuges angeordnet sein.

### Stand der Technik

Bekannte Ausführungen von Luftausströmern weisen mindestens eine Lamellenanordnung mit verschwenkbar gelagerten Lamellen zur Luftablenkung als auch eine Drosseleinrichtung mit bspw. mindestens einer Schließklappe zur Luftmengenregulierung auf. In Abhängigkeit der Stellung der Schließklappe wird Luft zugeführt oder die Luftzufuhr unterbunden.

Es sind Luftausströmer bekannt, bei denen Lamellen einer Lamellenanordnung nicht nur eine Luftablenkung, sondern auch eine Luftstromabsperrung bewirken. Hierzu sind die Lamellen soweit verschwenkbar, dass die Lamellen aneinander und bspw. an umlaufenden Anlageabschnitten eines Gehäuses im Luftkanal anliegen.

Grundproblem bei solchen selbstschließenden Lamellen sind die innenliegenden Mitnehmerzapfen und die Gabelaufnahme, die durch Versprünge und Ausklinkungen durch die Nachbarlamellen abgedeckt werden müssen. Dadurch steigt das Risiko für Lücken, durch die Luft in der geschlossenen Stellung trotzdem in den Fahrzeuginnenraum strömt. Zudem wird häufig das Erscheinungsbild solcher Lamellen als unansehnlich, unaufgeräumt und unschön empfunden.

Bei solchen Lamellen muss insbesondere darauf geachtet werden, dass diese richtig verbaut werden. Hierzu müssen spezielle Verbausicherungen ("Poka Yoke") bei den Lamellen vorgesehen werden, die zum einen komplexe Geometrien aufweisen, und damit von der Herstellung und den benötigten Werkzeugen aufwendiger sind, und zum anderen eine hohe Ausschussrate zur Folge haben. Weiterhin müssen verschiedene Teile gefertigt werden, da die Lamellen nicht untereinander austauschbar sind. Jede Lamelle einer solchen Lamellenanordnung kann dabei eine spezielle und zur Nachbarlamelle unterschiedliche Geometrie aufweisen.

Nachteile bestehen daher insbesondere aber nicht ausschließlich hinsichtlich einer schlechten Abdichtung, komplizierten Geometrien für die Lamellen und daher für die Herstellung notwendigen, teuren Werkzeugen.

Darüber hinaus weisen Lamellenanordnungen mit mehreren Lamellen in der Regel einen Mitnehmer oder eine Koppelstange auf, um die Lamellen synchron verschwenken zu können. Die Mitnehmer oder Koppelzapfen sind mit einer Antriebseinrichtung verbunden. Antriebseinrichtungen können mechanische Verstellelemente, wie bspw. Stellräder oder verschieb- und verschwenkbare Bedienelemente, oder motorische Antriebseinheiten aufweisen. Hierzu sind an den Lamellen Zapfen oder ähnliche Vorrichtungen erforderlich, welche für die Kopplung mit dem Mitnehmer oder der Koppelstange vorgesehen sind. Solche Vorrichtungen sowie der Mitnehmer oder die Koppelstange ragen dabei in den Luftkanal und beeinflussen die durchströmende Luft nachteilig. Zudem ist durch die Ausbildung der Lamellen deren Einbau und Verwendung auf eine spezielle Ausführung beschränkt.

Ein weiterer Nachteil der bekannten Lamellenanordnungen aus dem Stand der Technik besteht in der Übertragung von Momenten auf die Lamellen der Lamellenanordnung. Die Schnittstelle zwischen den verschwenkbaren Lamellen und einer ein Moment erzeugenden Vorrichtung, z.B. eines Motors, muss robust und toleranzunempfindlich ausgeführt sein, damit das Verschwenken ordnungsgemäß funktioniert und Abweichungen gering gehalten werden.

Eine Möglichkeit einer robusten Ausführung umfasst einen großbauenden Drehzapfen für die Lamellen, wobei demgegenüber eine toleranzunempfindliche Ausführung einen Drehzapfen mit möglichst kleinen Abmaßen erfordert.

Die DE 20 2005 004128 U1 zeigt eine Jalousie zur Regulierung eines Gasstroms. Die Jalousie besteht aus mehreren, um parallele Lagerachsen drehbaren Lamellen. An den Lamellenenden ist koaxial zur Lagerachse jeweils ein Ansatz mit zylindrischem Lagerzapfen und unzylindrischem Mitnehmerzapfen angeordnet, welche durch eine Lagerbohrung einer als Lagerschild bezeichneten Gehäusewand ragen. Auf jedem Mitnehmerzapfen ein Antriebsorgan in Form eines Schwenkhebels einer Schwenkeinrichtung aufnehmbar, das eine mit dem Mitnehmerzapfen korrespondieren Ausnehmung aufweist und als konische Überwurfmuffe für eine spielfreie Drehmomentübertragung sorgt. Die axiale Sicherung des Schwenkhebels erfolgt mittels einer Axialschraube. Für den Fall, dass benachbarte Jalousien gemeinsam betrieben werden sollen, ist zusätzlich auf dann sich gegenüberliegenden Schwenkhebeln eine Kupplungseinrichtung anzuordnen. Diese Kupplungseinrichtung besteht aus zwei korrespondieren Teilen einer Klauenkupplung, die nach dem Nut-Feder-Prinzip aufgebaut ist.

Die NL 2 011 079 C2 zeigt eine Jalousiekassette mit schwenkbaren Lamellen, die über an den Lamellenenden angeordneten Hebeln verschwenkbar in einem Rahmen gelagert sind. Bei zwei Jalousiekassetten nebeneinander angeordnet sind, ist ein speziell ausgestalteter Hebel vorgesehen. Auf der Seite des Hebels, die mit der Lamelle verbunden ist, weist der Hebel einen unrunden Zapfen auf, der in einer entsprechende Aufnahme der Lamelle aufgenommen wird. Auf der gegenüberliegen Seite des Hebels - aber auf derselben Achse - befindet sich eine eckige Aufnahme. Die einander gegenüberliegenden Lamellen zweier benachbarter Jalousien werden jeweils mit einem solchen Hebel ausgestattet und in die sich dann somit ebenfalls gegenüberliegenden eckigen Aufnahmen der Hebel eine Koppelstange formschlüssig eingesetzt, wodurch die Drehbewegung der einen Lamelle auf die andere übertragen werden kann.

In der EP 3 299 198 A1 ist ein Luftausströmer mit einer Schließklappe dargestellt, die über ein Bedienrad und einer Hebelkinematik verstellt werden kann, um den Luftstrom, der durch den Ausströmer strömt zu regulieren und zudem in der "Offenstellung" seitlich an einer Wandung des Gehäuseschachts anzuliegen, weshalb ein komplexer Verlagerungs- und Schwenkablauf der Schließklappe erforderlich ist. Die Schließklappe weist eine zu ihrer Schwenkachse koaxiale Aufnahme auf, in die ein Hebel fest eingesetzt ist, der von dem Bedienrad angetrieben wird.

In der EP 1 086 838 A1 ist eine Ausgestaltung und eine Montagemöglichkeit eines drehbaren Dämpfers in einem Schacht offenbart. Der Dämpfer besitzt, koaxial auf dessen Schwenkachse gegenüberliegend angeordnet, einen runden Lagerzapfen und eine unrunde Antriebswelle. Die Lagerung des Dämpfers in einem Gehäuse erfolgt auf der einen Seite mit dem Lagerzapfen in einer passgenauen runden Bohrung; auf der anderen Seite ragt die unrunde Welle durch eine ebenfalls runde, aber vom Durchmesser her größere Bohrung, als für eine passgenaue Lagerung der unrunden Welle erforderlich wäre. Dabei erfolgt das Einsetzen des Dämpfers über ein schräges Einschieben in den Schacht, wobei die Welle anhand einer Nut geführt wird, bis sie schließlich in die zugehörige Bohrung ragt. Anschließend wird ein Hebel auf die unrunde Welle gesteckt, wobei dieser eine zur unrunden Welle korrespondierende Aufnahme aufweist, die innerhalb eines runden Schaftes angeordnet ist, der wiederum zu der größeren Bohrung passt, durch die die unrunde Welle geführt ist. Daraus ergibt sich eine passgenaue Lagerung zwischen Hebel und Gehäuse.

### Aufgabe

Es besteht daher die Aufgabe darin eine Kopplungsanordnung zwischen einem Luftleitelement und einer Antriebseinrichtung sowie einen Luftausströmer mit einer Lamellenanordnung anzugeben, welche die vorstehend genannten Nachteile des Stands der Technik beheben und eine alternative, kostengünstige und einfache Lösung zum Stand der Technik bereitstellen.

### Lösung

Die vorstehend genannte Aufgabe wird durch eine erfindungsgemäße Kopplungsanordnung zwischen einem Luftleitelement und einer Antriebseinrichtung, mindestens aufweisend ein Luftleitelement und mindestens einen Hebel, gemäß dem unabhängigen Anspruch 1 gelöst.

Die Kopplungseinrichtung ermöglicht über die Verbindungeinrichtungen sowohl eine verschiedenartige Ausrichtung eines Hebels zu dem Lagerteil eines Luftleitelementes als auch eine robuste und toleranzunempfindliche Kraftübertragung. Hierzu können die Verbindungseinrichtungen beabstandet zur Schwenkachse des Luftleitelementes angeordnet sein oder sich beanstandet zur Schwenkachse des Luftleitelementes erstrecken.

Die Ausbildung der korrespondierenden Verbindungseinrichtungen selbst kann unterschiedlich sein. Wesentlich ist, dass die Kopplung des Hebels mit dem Luftleitelement bzw. dem Lagerteil des Luftleitelementes nicht direkt im Bereich der Schwenkachse erfolgt, oder, falls die Kopplung im Bereich der Schwenkachse erfolgt, die Verbindungseinrichtungen im Bereich der Kopplungsverbindung (Schnittstelle) eine flächenmäßig größere Erstreckung aufweisen, sodass Angriffspunkte zur Kraftübertragung abseits der Schwenkachse gebildet werden.

Die Kopplungsanordnung ermöglicht die Übertragung eines Drehmoments von einer Antriebseinrichtung, beispielsweise eines Motors, auf ein Luftleitelement. Das Luftleitelement kann als Lamelle oder als Drosselklappe einer Schließeinrichtung ausgebildet sein. Der Hebel kann über die Verbindungseinrichtungen des Lagerteil und des Hebels selbst in verschiedenen Ausrichtungen zu dem Lagerteil angeordnet werden. Dadurch eignet sich die Kopplungsanordnung für verschiedene Ausführungen von Luftausströmern. In weiteren Ausführungen können über Hebel, die mit Luftleitelementen durch entsprechende Kopplungsanordnungen verbunden sind, auch selbstschließende Lamellen bereitgestellt werden. Es kann dann auf separate Schließeinrichtungen verzichtet werden.

Das Luftleitelement kann mindestens einen Lagerteller und der Lagerteller mindestens einen exzentrisch zur Schwenkachse des Luftleitelements angeordneten Lagerzapfen aufweisen. Der Lagerteller dient zum einen zur Lagerung des Luftleitelementes in einem Gehäuse eines Luftausströmers und zum anderen zur Bereitstellung eines Angriffspunktes für ein Verschwenken des Luftleitelementes, wobei der Angriffspunkt beanstandet zur Schwenkachse verläuft.

Das Luftleitelement kann sich über den Lagerteller an einer Innenwand des Gehäuses abstützen. An dem gegenüberliegenden Ende kann das Luftleitelement über eine Blattfeder abgestützt sein. Hierzu ragt ein Lagerzapfen oder ein zweites Lagerteil des Luftleitelementes aus dem Gehäuse heraus. Dieses Teil liegt an einer außen am Gehäuse angeordneten Blattfeder an und wird über die Blattfeder spielfrei gelagert. Der Lagerzapfen oder das zweite Lagerteil des Luftleitelementes liegen vorzugsweise an einem mittleren Abschnitt der Blattfeder an. Die Blattfeder ist an ihren beiden Enden am Gehäuse an der Außenwand angebracht und übt über den mittleren Abschnitt einen Druck auf den Lagerzapfen oder das zweite Lagerteil aus. Das Luftleitelement lässt sich hierüber einfach spielfrei lagern, wobei ein einfacher Toleranzausgleich bereitgestellt wird und die Fertigungsabweichungen keine Nachbearbeitung erfordern.

In weiteren Ausführungsformen können Luftleitelemente auch anderweitig gefedert gelagert sein und/oder einen Toleranzausgleich bzw. einen Spielausgleich bereitstellen. So können Luftleitelemente beispielsweise über eine gemeinsame Federeinrichtung oder über einen Mitnehmer bzw. eine Koppelstange zueinander verspannt sein. Dabei können die Luftleitelemente über die gegenüberliegenden Lagerteller an beiden Seiten wechselseitig in Anlage mit gegenüberliegenden Gehäusewänden eines Gehäuses kommen. Die Luftleitelemente stützen sich dabei entweder an einer ersten oder einer gegenüberliegenden zweiten Gehäusewand ab. Der Verbund aus Luftleitelementen ermöglicht dabei eine spielfreie, toleranzausgleichende Lagerung.

Die Verbindungseinrichtungen des Lagerteils und des Hebels weisen Stifte und korrespondierende Öffnungen und/oder korrespondierende Profile auf. In der Ausführung mit Stiften und korrespondierenden Öffnungen können beispielsweise Stifte entweder am Hebel oder am Lagerteil vorgesehen sein. Am korrespondierenden Gegenstück sind mehrere Öffnungen vorgesehen. Dadurch können die Stifte wahlweise in die verschiedenen Öffnungen eingesetzt werden, was eine unterschiedliche Ausrichtung des Hebels relativ zum Luftleitelement in Abhängigkeit der ausgewählten Öffnungen bereitstellt. Es können hierzu beispielsweise zwei, drei, vier oder mehr Stifte vorgesehen sein. Die Stifte sind darüber hinaus beanstandet und damit exzentrisch zur Schwenkachse des Luftleitelementes angeordnet, damit eine robuste Ausführung für die Drehmomentübertragung bereitgestellt wird. Das Gegenstück (Hebel oder Lagerteil) kann entsprechend mehr Öffnungen als Stifte aufweisen, damit eine unterschiedliche Ausrichtung des Hebels relativ zum Luftleitelementes erreicht werden kann. Die Öffnungen und die Stifte erstrecken sich dabei konzentrisch zur Schwenkachse des Luftleitelementes.

Durch ein "Umdrehen" des Hebels ergeben sich weitere Ausrichtungen.

In weiteren Ausführungen weisen das Lagerteil und der Hebel an den korrespondierenden Verbindungsstellen korrespondierende Profile auf. Über die Profile kann der Hebel mit dem Lagerteil des Luftleitelements einfach verbunden werden. Es ist dabei auch möglich, die Ausrichtung des Hebels zu dem Luftleitelement unterschiedlich zu gestalten. Bspw. können sternförmige Profile vorgesehen sein. Dadurch ergeben sich verschiedene Möglichkeiten der Ausrichtung des Hebels zu dem Luftleitelement.

Die Hebel sind so ausgebildet, dass diese gegenüberliegende Verbindungsabschnitte aufweisen. Die Verbindungabschnitte sind unterschiedlich zueinander ausgebildet, sodass die Ausrichtung des Hebels relativ zum Luftleitelement zusätzlich vergrößert wird. So können beispielsweise auf einer Seite des Hebels Öffnungen in einer bestimmten Anordnung vorgesehen sein. Beispielsweise sind vier Öffnungen gegenüberliegend und konzentrisch zur Schwenkachse angeordnet. Auf der gegenüberliegenden Seite können wiederum vier Öffnungen vorgesehen sein, wobei diese zu den Öffnungen auf der anderen Seite um 45° versetzt sind. Eine solche Anordnung kann beispielsweise auch bei einzelnen Stiften und/oder Öffnungen vorgesehen sein. Gleiches gilt für zwei, drei, fünf oder mehr Öffnungen bzw. Stiften. Die Hebel können über beide Seiten auf die korrespondierenden Verbindungsabschnitte bzw. Lagerteile der Luftleitelemente aufgesetzt werden, sodass die Ausrichtmöglichkeiten zusätzlich vergrößert sind.

In weiteren Ausführungen sind die Luftleitelementes so ausgebildet, dass diese an den der Schwenkachse gegenüberliegenden Abschnitten jeweils einen Abschnitt mit einem Lagerteil aufweisen. Daher können Hebel an beiden Seiten der Lamellen unterschiedlich angebracht werden.

Die Luftleitflächen des Luftleitelements können in Bezug auf die Schwenkachse des Luftleitelements symmetrisch ausgebildet sein. Die symmetrische Ausbildung des Luftleitelementes ermöglicht die Verwendung dessen für verschiedene Ausführungen, beispielsweise von Luftausströmern.

Die Verbindungseinrichtungen als Stifte können in weiteren Ausführungen als Rastarme mit Haken ausgebildet sein. Die Rasthaken bzw. -arme ermöglichen ein Hintergreifen von Öffnungen, sodass eine sichere Verbindung durch ein Verrasten bereitgestellt wird. Die Stifte oder Rastarme können zudem gefedert ausgeführt sein, sodass ein Toleranzausgleich aufgrund der federnden Ausführung sowohl radial wie auch in Achsrichtung der Schwenkachse bereitgestellt wird.

Der Hebel kann zur Quererstreckung des Luftleitelements, orthogonal zur Schwenkachse, verdreht ausgerichtet sein. Für die Übertragung von Drehmomenten eignen sich Ausrichtungen des Hebels zur Quererstreckung des Luftleitelementes, orthogonal zur Schwenkachse, wobei die Quererstreckung im Wesentlichen durch die Luftleitflächen gebildet wird, wobei die Längserstreckung des Hebels nicht parallel oder in der gleichen Richtung wie die Quererstreckung des Luftleitelementes verläuft.

Die vorstehend genannte Aufgabe wird auch durch einen Luftausströmer nach Anspruch 5 gelöst, mindestens aufweisend ein Gehäuse mit einer Lufteintrittsöffnung und einer Luftaustrittsöffnung, wobei zwischen der Lufteintrittsöffnung und der Luftaustrittsöffnung ein Luftkanal definiert ist, und aufweisend eine Lamellenanordnung mindestens zur Luftablenkung mit mehreren Luftleitelementen.

Der Hebel ermöglicht eine Verlagerung der Lamellen von außen und ein Verschwenken ohne eine spezielle Ausbildung der Lamellen. Die Lamellen können daher als Gleichteile ausgeführt werden. Es ist damit nicht mehr notwendig, verschiedene Lamellen für eine Lamellenanordnung herzustellen. Die Lamellen können dabei in Bezug auf ihre Schwenkachse symmetrisch ausgebildet sein.

Durch die Verwendung der Kopplungsanordnung der vorstehend beschriebenen Varianten wird auch eine robuste und toleranzunempfindliche Kopplung und Übertragung von Drehmomenten für die Lamellenanordnung und den Luftausströmer bereitgestellt.

Das Luftleitelement bzw. die Lamelle und der Hebel stehen in keiner Relativbewegung zueinander und weisen eine gemeinsame Drehachse auf, wobei ein Drehmoment vom außenliegenden Bauteil (Hebel) auf das innenliegende Bauteil (Luftleitelement/Lamelle) übertragen wird und eine Montage mindestens einer weiteren Winkelstellung dieser beiden Bauteile zueinander ermöglicht wird, was eine Gleichteilverwendung für verschiedene Ausführungen bereitstellt.

Mehrere Lamellen können ein Lagerteil aufweisen. Es ist damit möglich, die Lamellen der Lamellenanordnung über korrespondierende Hebel der Lagerteile miteinander zu koppeln. Hierüber kann beispielsweise ein synchrones Verschwenken der Lamellen bereitgestellt werden. In weiteren Ausführungsformen ist es auch möglich, hierüber selbstschließende Lamellen bereitzustellen. Gegenüber bekannten Ausführungen aus dem Stand der Technik sind an den Lamellen selbst keine Vorsprünge oder Ausklinkungen erforderlich. Die Lamellen sind dabei einfach ausgebildet und können insbesondere flach ausgeführt sein. An den Luftleitflächen stehen keine Elemente ab, welche die Luftströmung behindern. Zudem können daher nur gleiche Teile verwendet werden, was den Einsatz der Lamellen für verschiedene Ausführungen und Anwendungen ermöglicht. Im Weiteren werden dadurch auch die Herstellkosten und der Herstellungsaufwand deutlich reduziert.

Die Lamellen können einen Lagerteller und die Lagerteller einen exzentrisch zur Schwenkachse der Lamellen angeordneten Lagerzapfen aufweisen, wobei die Lagerzapfen der Lagerteller mit einem ersten Mitnehmer verbunden sind. Diese Ausführung ermöglicht es nur einen einzelnen Hebel für eine Lamelle der Lamellenanordnung vorzusehen, wobei die Lamelle mit dem Hebel und die anderen Lamellen über die Lagerzapfen an den Lagertellern und den ersten Mitnehmer miteinander gekoppelt sind. Dadurch lassen sich mehrere Hebel einsparen. Die Übertragung der Kraft auf die Lamellen erfolgt analog zu einer Ausführung mit mehreren Lamellen, die jeweils einen separaten Hebel aufweisen, da zuerst über den einen Hebel die Kraft auf eine der Lamellen übertragen wird und die Lamellen untereinander über die exzentrisch angeordneten Lagerzapfen miteinander gekoppelt sind. Der Durchmesser der Lagerteller und die Position der Lagerzapfen an den Lagertellern definieren dabei auch, welche Momente übertragen werden können.

Der Lagerteller kann auch als Auflageabschnitt bzw. Anlageabschnitt gegenüber dem Gehäuse dienen. Über den Lagerteller können sich die Lamellen gegenüber dem Gehäuse abstützen und zugleich auch eine Abdichtung bereitstellen.

Mehrere Lamellen können ein Lagerteil aufweisen, das mit einem Hebel verbunden ist, wobei die Hebel an exzentrisch zu den Schwenkachsen der Lamellen befindlichen Abschnitten mit einem zweiten Mitnehmer verbunden sind. Die Hebel können an Verbindungsstellen zu dem zweiten Mitnehmer (z.B. Koppelstange) einen Zapfen oder ähnliches oder eine Aufnahmeöffnung und der zweite Mitnehmer bzw. die Koppelstange eine korrespondierende Aufnahmeöffnung oder einen korrespondierenden Zapfen oder ähnliches je Hebel aufweisen. Die Koppelstange wird im Wesentlichen orthogonal zu den Schwenkachsen der Lamellen verlagert. Mittels des Drehmoments, welches über die Hebel auf die Lamellen übertragen wird, erfolgt das synchrone Verschwenken zur Luftablenkung und in weiteren Ausführungen auch zur Luftabsperrung. Bei dieser Ausführung erfolgt die Übertragung der Drehmomente über die einzelnen Hebel, die mit den Lamellen verbunden und über den zweiten Mitnehmer gekoppelt sind.

Der Lagerteller kann in einer korrespondierenden Lageröffnung in einer Gehäusewand des Gehäuses aufgenommen sein, wobei der erste Mitnehmer zwischen dem Lagerteller und dem Gehäuse angeordnet ist. Der erste Mitnehmer ragt nicht in den Luftkanal hinein und wird über die Lagerteller gegenüber dem Luftkanal abgeschirmt. Das Gehäuse selbst ist entsprechend ausgebildet und weist hierzu die Lageröffnungen für die Lagerteller und gegebenenfalls eine Führung für den ersten Mitnehmer auf. Diese Ausformungen (Lageröffnung und Führung) sind in die Gehäusewand des Gehäuses eingebracht. Daher ragen die darin aufgenommenen Komponenten nicht in den Luftkanal und bewirken keine Verwirbelung der Luft. In weiteren Ausführungsformen können die Ausformungen von einem weiteren Teil abgedeckt werden. Hierüber lassen sich Leckluftströme vermeiden.

Der erste Mitnehmer kann in einer Führung im Gehäuse verlagerbar aufgenommen sein. Der erste Mitnehmer kann insbesondere in einer Führung aufgenommen sein. Die Führung ist so ausgebildet, dass sowohl eine seitliche Verlagerung des ersten Mitnehmers als auch eine Verlagerung in Luftströmungsrichtung zum Ausgleich der Verlagerung bei der Rotation der Lagerteller und der entsprechenden Schwenkbewegung der Lagerzapfen bereitgestellt wird.

Die Lamellen können soweit verschwenkbar sein, dass diese für eine Luftmengenregulierung in Anlage bringbar sind. Die Lamellenanordnung des Luftausströmer dient dabei nicht nur zur Luftablenkung, sondern auch zur Luftmengenregulierung.

Die Lamellen können einen flachen Aufbau aufweisen. Es sind insbesondere keine Vorsprünge, Ausklinkungen und Gabelaufnahmen oder Mitnehmer an den Lamellen erforderlich. Die Lamellen können daher analog zu Lamellen bei Luftausströmern mit separater Drosseleinrichtung sehr flach und einfach ausgebildet werden.

Außenliegende Hebel, die nicht in den Luftkanal ragen, ermöglichen flache Lamellen ohne Versprünge und Ausklinkungen und dadurch bessere Leckluftwerte.

Flache, symmetrische Lamellen können als Gleichteile für links und rechts schließende Gehäuse verwendet werden (z.B. 40° nach links bzw. rechts plus zusätzlichen 40° auf einer Seite zum Schließen des Luftkanals).

Es lassen sich flache, selbstschließende Lamellen über einen außenliegenden Hebel realisieren. Die Lamellen sind dadurch in sich spiegelsymmetrisch und können ohne "Poka Yoke" verbaut werden. Es kann daher auf Vorkehrungen verzichtet werden, die einen falschen Einbau verhindern. Dadurch können die Lamellen einfacher, leichter und damit kostengünstiger ausgeführt werden. Die Herstellzeiten solcher Hebel werden dadurch ebenfalls reduziert, insbesondere bei Lamellen aus Kunststoff, die in einem Spritzgießprozess hergestellt werden. Die einfache Ausgestaltung der Lamellen ermöglicht weiterhin die Verwendung einfach ausgebildeter Werkzeuge (z.B. Werkzeugformen für den Spritzguss), so dass der Ausschuss bei der Fertigung reduziert ist. Die Lamellen weisen dabei keine komplexen Geometrien auf.

Die Hebel sind so einsetzbar, dass sie bspw. in einem Winkelbereich von 15° bis 35°, bspw. im Bereich von ca. 22,5°, zur X-Achse links oder rechts eingebaut werden können.

Die Hebel können zur Quererstreckung der Lamellen, orthogonal zur Schwenkachse, verdreht ausgerichtet sein. Die Hebel selbst können im Wesentlichen eine gerade Erstreckung und zwei Verbindungstellen aufweisen. Eine Verbindungstelle für die Lagerteile und eine Verbindungstelle für einen zweiten Mitnehmer oder eine Koppelstange.

In weiteren Ausführungen können die Hebel zur Quererstreckung der Lamellen, orthogonal zur Schwenkachse, um mindestens 5 Grad ausgerichtet sein. Die Ausrichtung der Hebel zu den Lamellen stellt sicher, dass ein ausreichender "Druck" auf die Lamellen ausgeübt werden kann, um die Lamellen bspw. in eine Schließstellung zu bringen.

Die Lamellen können weiterhin eine Abdichtung aufweisen. Über die Abdichtung können im geschlossenen Zustand Leckluftströme im Wesentlichen vollständig vermieden werden. Dadurch dass die Lamellen flach ausgeführt werden können, ist auch die Abdichtung leichter herzustellen und zu gewährleisten.

Die Profile können so ausgebildet sein, dass mehrere Ausrichtungen zwischen den Hebeln und einer Quererstreckung der Lamellen, orthogonal zur Schwenkachse, einnehmbar sind. Die Hebel und die Lamellen können daher für verschiedene Typen von Luftausströmern verwendet werden. Es ist ferner möglich, die Hebel sowohl für eine "links"- als auch für eine "rechts"-Ausrichtung zu verwenden.

In weiteren Ausführungen kann die Ausrichtung der Hebel zu den Lamellen veränderbar sein. Die Verbindungseinrichtungen, bspw. die korrespondierenden Profile, können einsteckbar ausgebildet sein, so dass ein Austausch und Wechsel möglich sind.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine Gegenüberstellung einer bekannten Ausführung einer Lamellenanordnung und einer Lamellenanordnung der hierin beschriebenen technischen Lehre;
- Fig. 2: eine schematische Darstellung von Steckmöglichkeiten für eine Kopplungsanordnung der hierin beschriebenen technischen Lehre;
- Fig. 3: schematische Darstellungen verschiedener Stellungen von Lamellenanordnungen;
- Fig. 4: schematische Darstellungen zur Verdeutlichung des Wirkprinzips der Kopplungsanordnung;
- Fig. 5: eine schematische Schnittansicht durch das Gehäuse eines Luftausströmers mit einer erfindungsgemäßen
- Kopplungsanordnung und einer Lamellenanordnung: einer weiteren Ausführungsform;
- Fig. 6: weitere schematische Schnittansichten der Lamellenanordnung von Fig. 5;
- Fig. 7: eine perspektivische Darstellung eines Hebels einer erfindungsgemäßen Kopplungsanordnung einer ersten Ausführungsform;
- Fig. 8: eine perspektivische Darstellung einer Gehäusewand eines Gehäuses eines Luftausströmers mit einer erfindungsgemäßen Kopplungsanordnung;
- Fig. 9: eine perspektivische Darstellung einer Lamelle mit einem Lagerteil einer erfindungsgemäßen Kopplungsanordnung;
- Fig. 10: eine perspektivische Darstellung der Kopplungsanordnung mit einer Lamelle und einem Hebel der ersten Ausführungsform;
- Fig. 11: eine weitere perspektivische Darstellung der Kopplungsanordnung von Fig. 10;
- Fig. 12: schematische Darstellungen der Anordnung und Ausrichtung eines Hebels der ersten Ausführungsform relativ zu einem Lagerteil einer Lamelle;
- Fig. 13: eine perspektivische Darstellung eines Hebels einer erfindungsgemäßen Kopplungsanordnung einer zweiten Ausführungsform;
- Fig. 14: eine perspektivische Darstellung einer Gehäusewand eines Gehäuses eines Luftausströmers mit einer erfindungsgemäßen Kopplungsanordnung;
- Fig. 15: eine perspektivische Darstellung einer Lamelle mit einem Lagerteil einer erfindungsgemäßen Kopplungsanordnung;
- Fig. 16: eine perspektivische Darstellung der Kopplungsanordnung mit einer Lamelle und einem Hebel der zweiten Ausführungsform;
- Fig. 17: eine weitere perspektivische Darstellung der Kopplungsanordnung von Fig. 16;
- Fig. 18: schematische Darstellungen der Anordnung und Ausrichtung eines Hebels der zweiten Ausführungsform relativ zu einem Lagerteil einer Lamelle;
- Fig. 19: eine schematische Darstellung der Ausrichtung eines Hebels einer gattungsgemäßen Kopplungsanordnung einer dritten Ausführungsform relativ zu einer Lamelle; und
- Fig. 20: eine schematische Darstellung der Ausrichtung eines Hebels einer gattungsgemäßen Kopplungsanordnung einer
- vierten: Ausführungsform relativ zu einer Lamelle.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

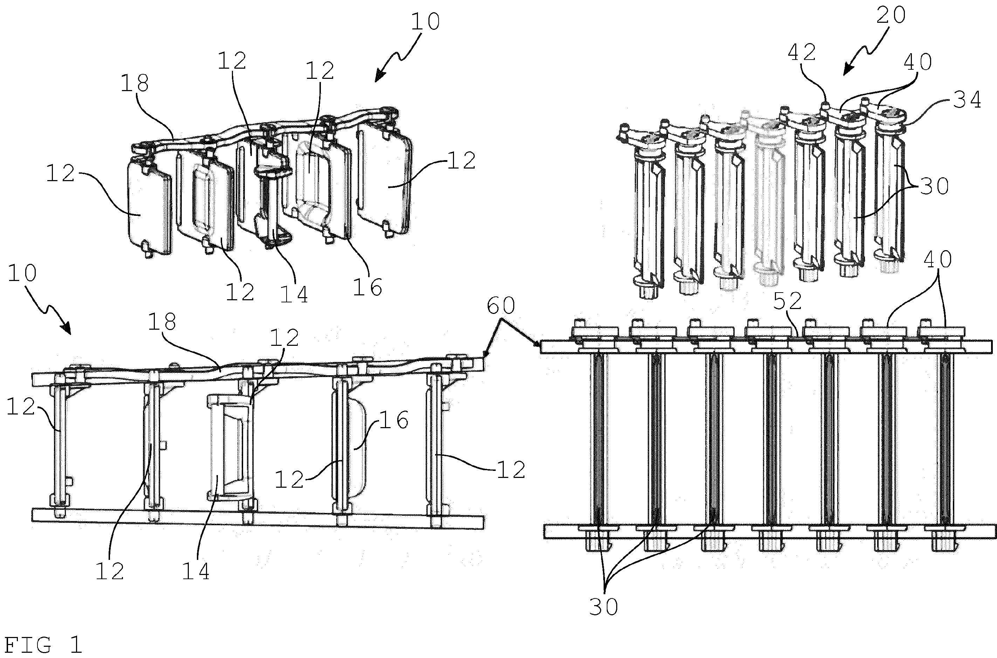

Fig. 1 zeigt die Gegenüberstellung einer bekannten Ausführung einer Lamellenanordnung 10 mit selbstschließenden Lamellen 12 und einer Lamellenanordnung 20 der hierin beschrieben technischen Lehre.

Die Lamellenanordnung 10 weist Lamellen 12 mit einer Gabel 14 für ein nicht dargestelltes Bedienelement und mit Mulden 16 auf. Die Lamellen 12 sind als selbstschließende Lamellen 12 ausgebildet, wodurch die Mulden 16 und die Anordnung der Gabel 14 erforderlich sind. Über die Koppelstange 18 können die Lamellen 12 gemeinsam verschwenkt werden. Es ist offensichtlich, dass die Lamellen 12 untereinander unterschiedlich ausgebildet sind und daher auch nur für spezielle Positionen innerhalb der Lamellenanordnung 10 verwendet werden können. Zudem bedingt die Ausgestaltung der Lamellen 12 auch, dass die Lamellen 12 nicht für andere Arten von Luftausströmern verwendet werden können. Die Lamellen 12 sind daher keinesfalls als Gleichteile für verschiedene Anwendungen zu verwenden.

Die Ausbildung der Lamellen 12 bedingt auch, dass es zu Leckluftströmen in der geschlossenen Stellung der Lamellen 12 kommt. Eine Abdichtung kann daher nur unzureichend bereitgestellt werden. Ein weiterer Nachteil der Lamellenanordnung 10 ist darin zu sehen, dass die Herstellkosten für die Lamellen 12 hoch sind, weil zum einen komplexe Werkzeuge verwendet werden müssen und die Lamellen 12 eben nicht als Gleichteile ausgebildet sind, sodass verschiedene Werkzeugformen für die verschiedenen Lamellen 12 erforderlich sind.

Komplexe Werkzeuge für die Lamellen 12, die insbesondere in einem Spritzgussprozess gefertigt werden, erfordern häufig auch ein Nacharbeiten und komplexe Werkzeugformen mit Schiebern und dergleichen.

Die Lamellenanordnung 20 hingegen weist Lamellen 30 auf, die als Gleichteile gefertigt werden können. Die Lamellen 30 weisen auch einfache Geometrien auf, sodass keine komplexen Werkzeuge zur Herstellung in einem Spritzgussprozess erforderlich sind. Um eine selbstschließende Funktion der Lamellen 30 bereitzustellen, sind diese über einen Lagerteil 32 mit Hebeln 40 verbunden, die einen Koppelzapfen 42 aufweisen, welche zur Kraftübertragung auf die Lamellen 30 erforderlich sind, damit die Lamellen 30 in der Schließstellung in Anlage zueinander kommen können.

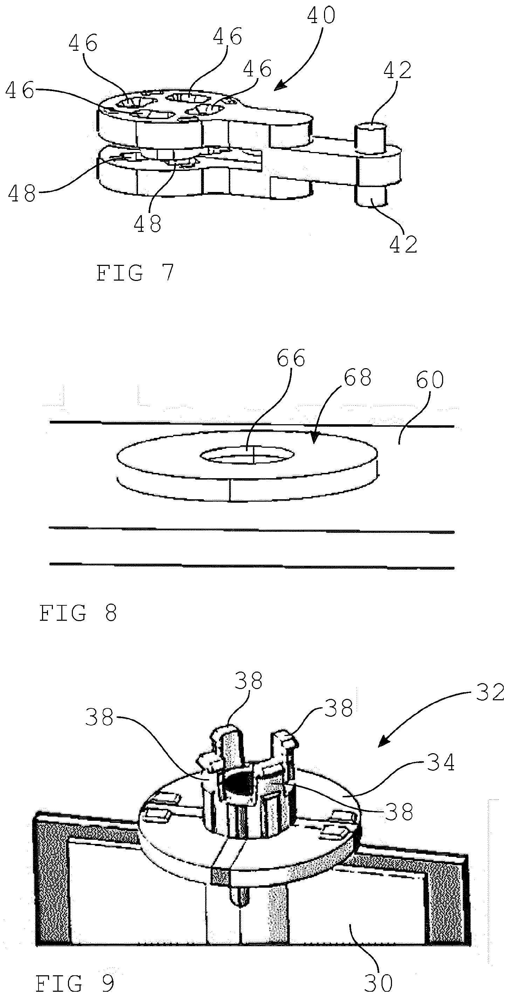

Die Hebel 40 ermöglichen zum einen eine verschiedenartige Ausrichtung relativ zur Luftleitfläche der Lamellen 30 und zum anderen eine robuste und toleranzunempfindliche Ausbildung der Schnittstelle zwischen Hebel 40 und Lamelle 30. Die Hebel 40 befinden sich zudem außerhalb eines Luftkanals im Gehäuse 60. Ein zweiter Mitnehmer 52, der als Koppelstange dient, ist mit den Koppelzapfen 42 auf einer Seite der Hebel 40 verbunden, sodass die Hebel 40 ein synchrones Verschwenken der Lamellen 30 bewirken. Der zweite Mitnehmer 52 kann zusätzlich mit einer Antriebseinrichtung verbunden sein. In weiteren Ausführungsformen kann eine Antriebseinrichtung über einen oben gelagerten Koppelzapfen 42 direkt oder indirekt auf einen Hebel 40 wirken, der mit seinem unteren Koppelzapfen 42 (siehe beispielsweise Fig. 7) über einen zweiten Mitnehmer 52 mit den anderen Lamellen 30 gekoppelt ist.

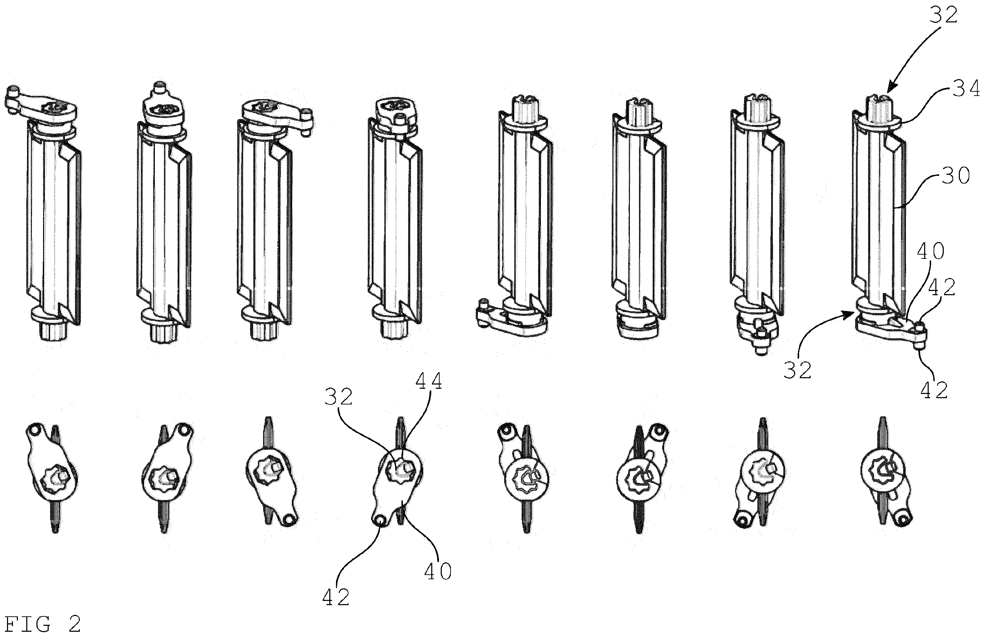

Fig. 2 zeigt schematische Darstellungen von Steckmöglichkeiten für eine Kopplungsanordnung mit einer Lamelle 30 und einem Hebel 40. Die Lamelle 30 weist einen Körper mit Luftleitflächen an den gegenüberliegenden Seiten auf. Zusätzlich weist die Lamelle 30 an den gegenüberliegenden Enden jeweils ein Lagerteil 32 auf. Die Lagerteile 32 erstrecken sich entlang der Schwenkachse S der Lamelle 30.

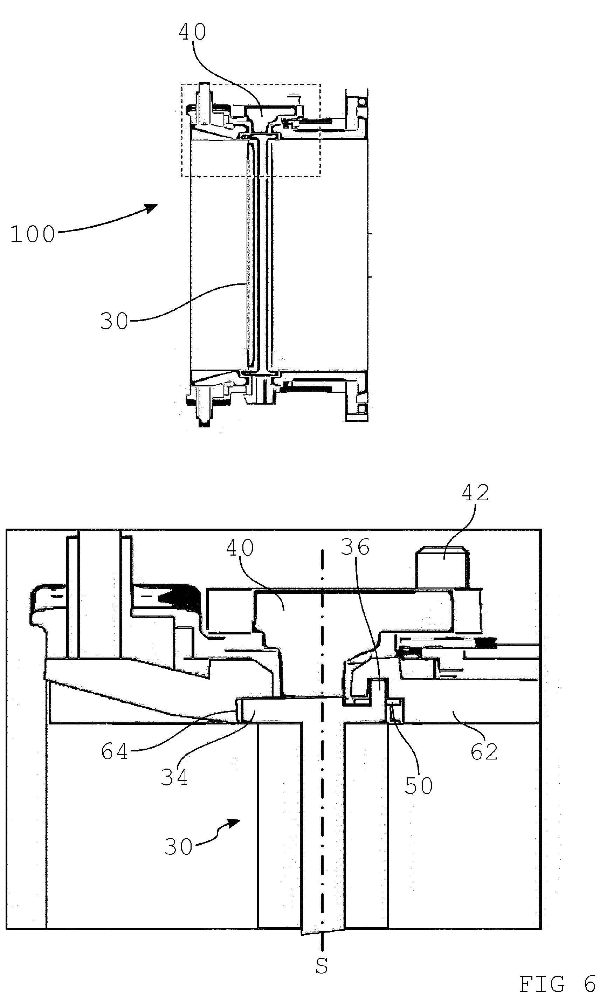

Die Lagerteile 32 weisen Verbindungseinrichtungen auf, die in dem gezeigten Ausführungsbeispiel als Profilkörper mit einem Sternprofil ausgeführt sind. Die Profilkörper der Lagerteile 32 liegen auf einem Lagerteller 34 auf. Im eingebauten Zustand der Lamellen 30 ist der Lagerteller 34 in einer Lageröffnung 64 der Gehäusewand 62 des Gehäuse 60 aufgenommen (siehe beispielsweise Fig. 6). Die Lageröffnung 64 erstreckt sich ausgehend vom Luftkanal in die Gehäusewand 62 des Gehäuses 60. Dadurch liegt der Lagerteller 34 nicht außen am Gehäuse 60 auf. Über eine Lageröffnung 64 ragt die Verbindungseinrichtung bzw. das Lagerteil 32 aus dem Gehäuse 60 hervor und ist daher von außen zugänglich. Über den außen zugänglichen Abschnitt des Verbindungsteiles 32 erfolgt die Kopplung mit dem Hebel 40. Der Hebel 40 weist hierzu eine Öffnung 44 mit einem dem Profil des Lagerteils 32 korrespondierenden Querschnitt auf.

Durch die sternförmige Ausgestaltung des Lagerteil 32 und der Öffnung 44 kann der Hebel 40 in verschiedenen Ausrichtungen zur Lamelle 30 aufgebracht werden. Das Aufbringen des Hebels 40 kann durch ein einfaches Aufstecken auf das Lagerteil 32 erfolgen. Zudem kann der Hebel 40 sowohl an einem oberen als auch an einem unteren Lagerteil 32 aufgesteckt werden. Der Hebel 40 selbst kann wiederum auf beiden Seiten unterschiedlich ausgestaltet sein, sodass sich verschiedene Ausrichtungen ergeben können. Der Hebel 40 weist zudem auf beiden Seiten einen Koppelzapfen 42 auf, damit unabhängig von der Kopplung an einem oberen oder einem unteren Lagerteil 32 eine Verbindung mit Mitnehmern 50,52 oder einer anderen Koppelstange erfolgen kann. Die Anordnung der Koppelstange bzw. Mitnehmer 50,52 ist dann unabhängig von der Anordnung und Ausrichtung der Hebel 40 an der Lamelle 30 bzw. dem Lagerteil 32.

Anstelle von sternförmigen Lagerteilen 32 können auch andere Verbindungseinrichtungen vorgesehen sein. Hierzu wird insbesondere auf die Ausführungen der Fig. 7-20 verwiesen. Analog dazu sind dann die Hebel 40 anderweitig ausgebildet und weisen bspw. Öffnungen 46, 48 auf.

Sowohl die Lamelle 30 als auch der Hebel 40 werden in einem Spritzgussprozess hergestellt und sind daher in hoher Stückzahl kostengünstig produzierbar. Die einfache Ausgestaltung der Lamellen 30 und des Hebels 40 ermöglicht die Verwendung einfach ausgebildeter Werkzeuge für den Spritzgussprozess, sodass auch dadurch Kosten eingespart werden können. Durch die Ausbildung von Gleichteilen für verschiedene Ausführungen ergeben sich weitere Vorteile.

Die gezeigte Ausbildung der Kopplungsanordnung ermöglicht wie bereits angegeben eine robuste Schnittstelle, die zugleich toleranzunempfindlich ist. Daher wird auch die Fertigung dieser Teile vereinfacht, da keine engen Toleranzvorgaben eingehalten werden müssen. Dadurch, dass die Kopplung außerhalb des Gehäuses 60 erfolgt, ergeben sich Vorteile für einen Luftausströmer, da es zu keiner ungewünschten Luftverwirbelung über einen Mitnehmer 50, 52 kommt.

Die Hebel 40 ermöglichen zudem die Übertragung eines Momentes oder einer Kraft auf die Lamellen 30, sodass diese als selbstschließende Lamellen 30 verbaut werden können. Hierzu ist unter anderem die versetzte Anordnung des Hebels 40 zu den Luftleitflächen der Lamellen 30 erforderlich, sodass in einer Schließstellung die Lamellen 30 aneinander anliegen. Die Hebel 40 müssen dabei jedoch soweit zugänglich sein, dass diese sich nicht blockieren.

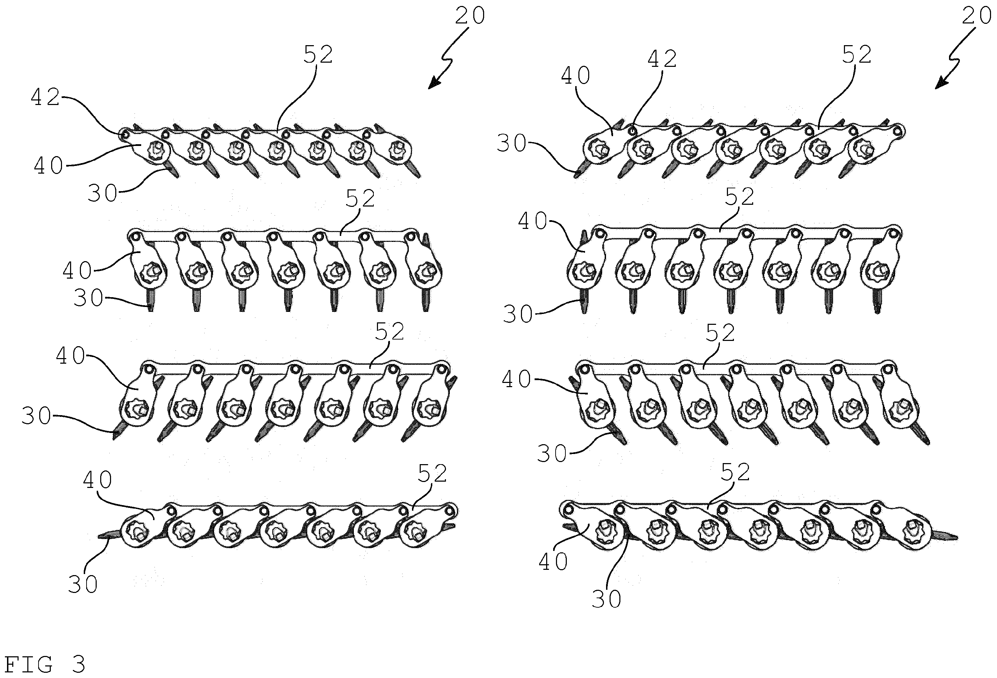

Fig. 3 zeigt schematische Darstellungen verschiedener Stellungen von Lamellenanordnungen 20. Auf der linken Seite von Fig. 3 ist eine Lamellenanordnung 20 dargestellt, wobei die Lamellen 30 links schließend ausgeführt sind. Die Lamellenanordnung 20 auf der rechten Seite ist rechts schließend ausgebildet.

Auf der linken Seite ist oben eine Stellung der Lamellen 30 nach rechts gezeigt. Darunter befindet sich eine neutrale Stellung, wobei ein ausgegebener Luftstrom nicht abgelenkt wird. Darunter ist die Ablenkung nach links gezeigt und schließlich ganz unten die Schließstellung.

Auf der rechten Seite zeigt die Lamellenanordnung 20 oben eine Luftablenkung nach links, darunter eine neutrale Stellung und darunter eine Luftablenkung mit Stellung der Lamellen 30 nach rechts. Am unteren Abschnitt ist die geschlossene Stellung der Lamellen 30 gezeigt, wobei die Lamellen 30 dichtend aneinander anliegen. Hierzu können die Lamellen 30 an den umlaufenden Kanten Dichtabschnitte aus einem elastischen Material aufweisen, welches in einem Spritzgussprozess in einem 2-Komponentenverfahren aufgebracht wird. in alternativen Ausführungsformen kann das Anbringen des Dichtmaterials auch in einem separaten Schritt erfolgen. Zusätzlich kann ein Gehäuse 60 umlaufende Dichtabschnitte aufweisen, sodass auch hierüber eine abdichtende Wirkung in der Schließstellung der Lamellen 30 erzielt wird. Leckluftströme lassen sich dadurch nahezu vollständig ausschließen.

Die Übertragung zum Verschwenken erfolgt über den Mitnehmer 52. Der Mitnehmer 52 ist direkt oder indirekt, beispielsweise über einen oberen Kopfzapfen 42 eines Hebels 40, mit einer Antriebseinrichtung verbunden. Antriebseinrichtungen können beispielsweise Bedienelemente, wie Stellräder, Schieber o. ä. sein. In weiteren Ausführungsformen können Antriebseinrichtungen auch durch Motoren gebildet werden.

Die Hebelwirkung über die Hebel 40 ermöglicht auch ein einfaches Verbringen in die Schließstellung der Lamellen 30.

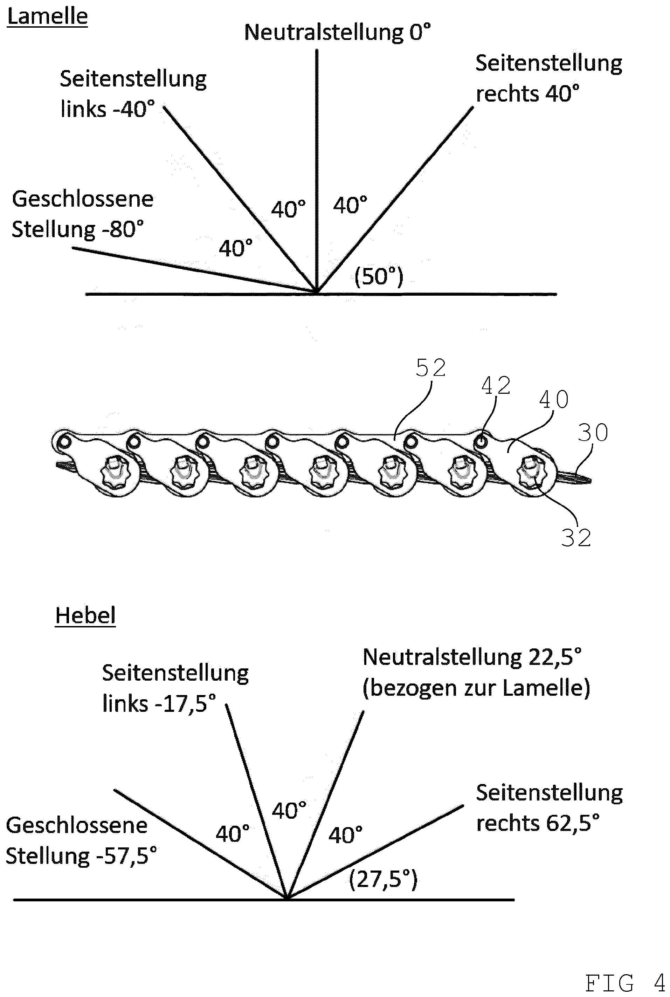

Fig. 4 zeigt das Wirkprinzip des versetzt eingebauten Hebels 40 zu der Lamelle 30. In Fig. 4 ist eine mögliche Ausrichtung gezeigt. Die Gradzahlen müssen daher nicht entsprechend für alle Anwendungen so umgesetzt werden. Es ist offensichtlich, dass bei anderen Ausrichtungen andere Seitenstellungen, Neutralstellungen und geschlossene Stellungen auftreten können. Auch die Ausrichtung von Lamelle 30 zu Hebel 40 kann sich dabei unterscheiden.

In der Neutralstellung der Lamelle 30 befindet sich der Hebel 40 in dem Ausführungsbeispiel von Fig. 4 um 22,5° versetzt zur Lamelle 30. In der geschlossenen Stellung der Lamelle 30 befindet diese sich in einer Auslenkungen um -80°, wobei der Hebel 40 eine Auslenkungen um -57,5° bezogen auf die dargestellte Grundlinie in positiver Drehrichtung aufweist. In den Seitenstellungen links und rechts ergeben sich die in Fig. 4 dargestellten Verhältnisse von Lamelle 30 zu Hebel 40.

Die beispielhafte Ausführung beschränkt die technische Lehre jedoch nicht auf die angegebenen Gradzahlen. So kann beispielsweise der Hebel 40 eine stärkere oder schwächere Ausrichtung relativ zur Lamelle 30 in einer Neutralstellung aufweisen. Dies hängt unter anderem von der Ausbildung der Verbindungseinrichtungen, beispielsweise des Lagerteils 32, und der Öffnungen des Hebels 40 ab. In weiteren Ausführungsformen weist das Lagerteil 32 Rastarme 38 auf. Durch die nahezu symmetrische Stellung der Hebel 40 zwischen der geschlossenen und der Seitenstellung wird ferner verhindert, dass sich die Hebel 40 gegenseitig blockieren.

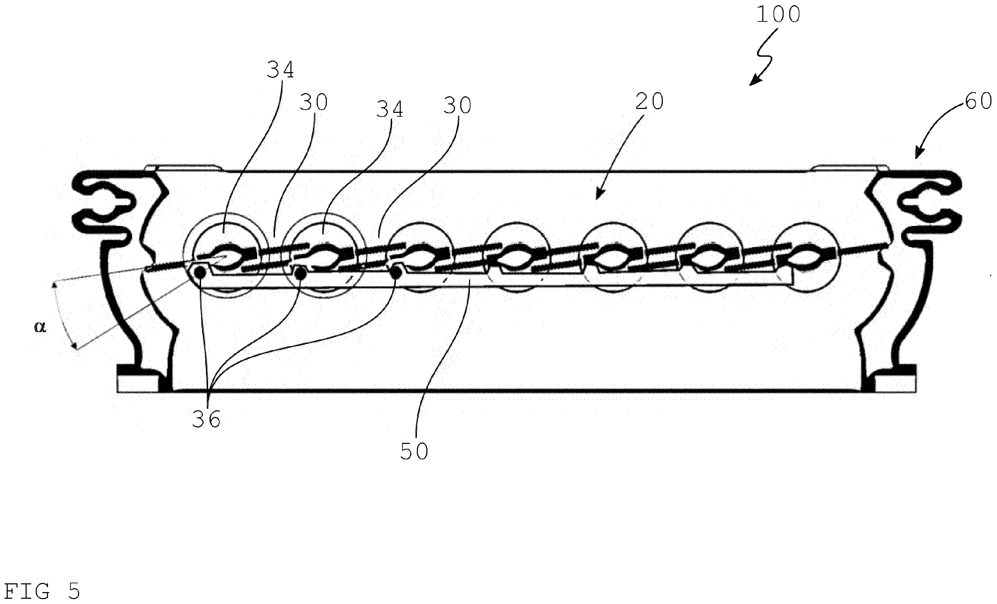

Fig. 5 zeigt eine schematische Schnittansicht durch das Gehäuse 60 eines Luftausströmer 100 mit einer erfindungsgemäßen Kopplungsanordnung und einer Lamellenanordnung 20 in einer weiteren Ausführungsform. In dieser Ausführungsform weisen die Lagerteller 34 Lagerzapfen 36 auf. Diese sind exzentrisch zur Schwenkachse S der Lamellen 30 angeordnet. Die Besonderheit liegt hierbei darin, dass der erste Mitnehmer 50 nicht außen am Gehäuse 60 angeordnet ist, sondern zwischen den Lagertellern 34 und einer Gehäusewand 62. In einer solchen Ausführungsform braucht nur eine der Lamellen 30 der Lamellenanordnung 20 über das Lagerteil 32 mit einem Hebel 40 verbunden sein. Die Übertragung für die selbstschließende Funktion der Lamellen 30 erfolgt über den ersten Mitnehmer 50 und von außerhalb über eine Antriebseinrichtung über den Hebel 40, der beispielsweise mit der Lamelle 30 auf der linken Seite gekoppelt ist. Der Hebel 40 weist dabei eine Auslenkung um den Winkel α relativ zur Luftleitfläche der Lamelle 30 auf. Ein Verschwenken des Hebels 40 über die Antriebseinrichtung bewirkt dabei auch ein Verschwenken der anderen Lamellen 30, da diese über die Lagerzapfen 36 an den Lagertellern 34 und den ersten Mitnehmer 50 miteinander gekoppelt sind. Die Anordnung der Lagerzapfen 36 ermöglicht dabei auch die selbstschließende Ausrichtung der Lamellen 30.

Wie in Fig. 5 weiter gezeigt, können die beiden äußeren Lamellen 30 an entsprechenden Anlageabschnitten im Gehäuse 60 anliegen. Die Anlageabschnitte oder die Lamellen 30 selbst können hierbei dann abdichtende Eigenschaften in den Anlagebereichen aufweisen. Die Dichtwirkung kann durch gesonderte Dichtmittel erreicht werden. In der Schließstellung liegen die Lamellen 30 nicht an den äußeren Kanten aneinander an, sondern können wie in Fig. 5 gezeigt, mit einer äußeren Kante an einem im Wesentlichen mittigen Abschnitt einer Nachbarlamelle 30 anliegen.

Es können dadurch Hebel 40 eingespart werden, wodurch der Teile- und Montageaufwand reduziert werden können. Die Anordnung des ersten Mitnehmers 50 zwischen den Lagertellern 34 und der Gehäusewand 62 bietet die gleichen Vorteile, wie eine Kopplung der Lamellen 30 außerhalb des Gehäuses 60, wobei es zu keiner Luftverwirbelung und ungewollten Luftablenkung durch Mitnehmer 50, 52 oder Koppelstangen im Luftkanal kommt.

Fig. 6 zeigt weitere schematische Schnittansichten der Lamellenanordnung 20 und des Luftausströmer 100 von Fig. 5. Die Gehäusewand 62 weist eine Lageröffnung 64 für die Lagerteller 34 auf. Der Lagerteller 34 schließt dabei bündig mit der Innenseite der Gehäusewand 62 ab und ragt daher nicht in der Luftkanal. Dadurch werden keine störenden Verwirbelungen erzeugt. Es treten auch weniger Geräusche auf. Zusätzlich weist die Gehäusewand 62 im Bereich des Lagertellers 34 und der Lageröffnung 64 eine Nut für den Lagerzapfen 36 auf. Die Nut ist so ausgebildet, dass der Lagerzapfen 36 in sämtliche Stellungen verbracht werden kann, ohne dass es zu einer Blockade kommt. Die vergrößerte Darstellung auf der unteren Hälfte von Fig. 6 zeigt die Anordnung des ersten Mitnehmers 50 zwischen der Gehäusewand 62 und dem Lagerteller 34. Der Mitnehmer 50 ragt nicht in den Luftkanal, wie dies bei bekannten Ausführungen aus dem Stand der Technik häufig auftritt. Die hier vorgeschlagene Lösung bietet den Vorteil, dass der Mitnehmer 50 nicht in Luftkanal ragt und zudem eine Kraftübertragung zum Verschwenken der Lamellen 30, auch für eine Schließfunktion, in entsprechendem Maße bereitstellt.

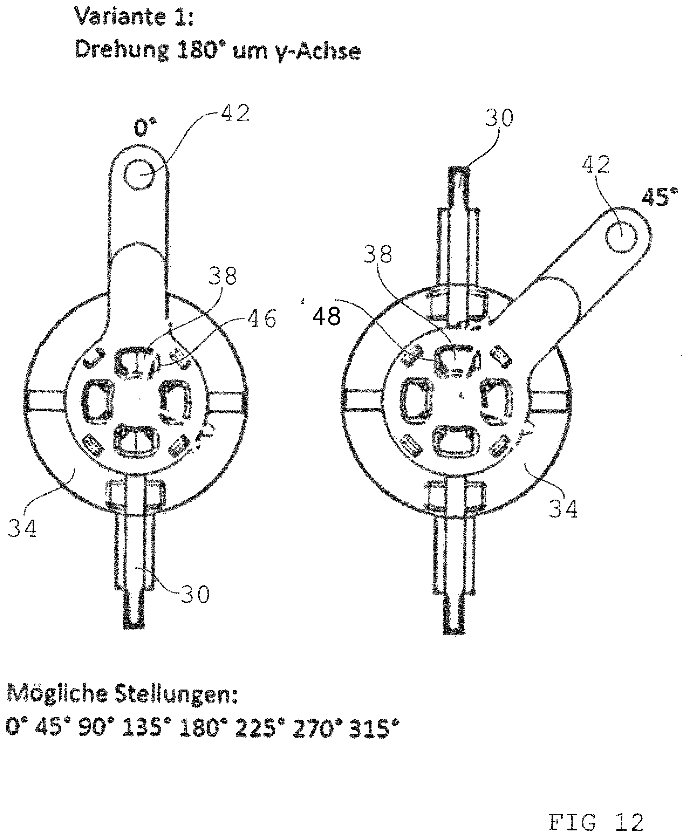

Fig. 7 zeigt eine perspektivische Darstellung eines Hebels 40 einer erfindungsgemäßen Kopplungsanordnung einer ersten Ausführungsform ("Variante 1"). Der Hebel 40 weist einen Verbindungabschnitt mit Verbindungseinrichtungen auf. Die Verbindungseinrichtungen werden durch die Öffnungen 46 gebildet. Der Hebel 40 ist so ausgebildet, dass dieser auf der oberen und der unteren Seite jeweils Öffnungen 46 und 48 sowie Koppelzapfen 42 aufweist. Die Koppelzapfen 42 liegen sich direkt gegenüber und weisen eine gemeinsame Mittelachse auf. Die Öffnungen 46 und 48 sind jedoch versetzt zueinander angeordnet (siehe Fig. 12), sodass in Abhängigkeit der verwendeten Seite des Hebels 40 unterschiedliche Ausrichtungen des Hebels 40 zu einer Lamelle 30 erreicht werden können. Die Öffnungen 46 und auch die Öffnungen 48 erstrecken sich konzentrisch zur Schwenkachse S einer Lamelle 30 im verbauten Zustand.

Fig. 8 zeigt eine perspektivische Darstellung einer Gehäusewand 62 eines Gehäuses 60 eines Luftausströmers 100 mit einer erfindungsgemäßen Kopplungsanordnung. Die Gehäusewand 62 weist auf der Außenseite eine Auflagefläche 68 für die entsprechende Unterseite des Hebels 40 auf. Der Hebel 40 wird dann im Betrieb über die Auflagefläche 68 verdreht.

Die Auflagefläche 68 dient zudem auch als Gegenlager für eine ordnungsgemäße Verrastung und damit für einen Spielausgleich.

Fig. 9 zeigt eine perspektivische Darstellung einer Lamelle 30 mit einem Lagerteil 32 einer erfindungsgemäßen Kopplungsanordnung. Das Lagerteil 32 weist eine andere Ausgestaltung auf, als die Lagerteile 32 der vorstehend beschriebenen Ausführungen. Das Lagerteil 32 erstreckt sich ausgehend von dem Lagerteller 34 und weist vier Rastarme 38 auf, die gegenüberliegend und konzentrisch zur Schwenkachse S der Lamelle 30 angeordnet sind. Der schwarz dargestellte, die Lamelle 30 umgebende Abschnitt ist als Dichtmittel ausgeführt und dient zur dichten Anlage in der Schließstellung.

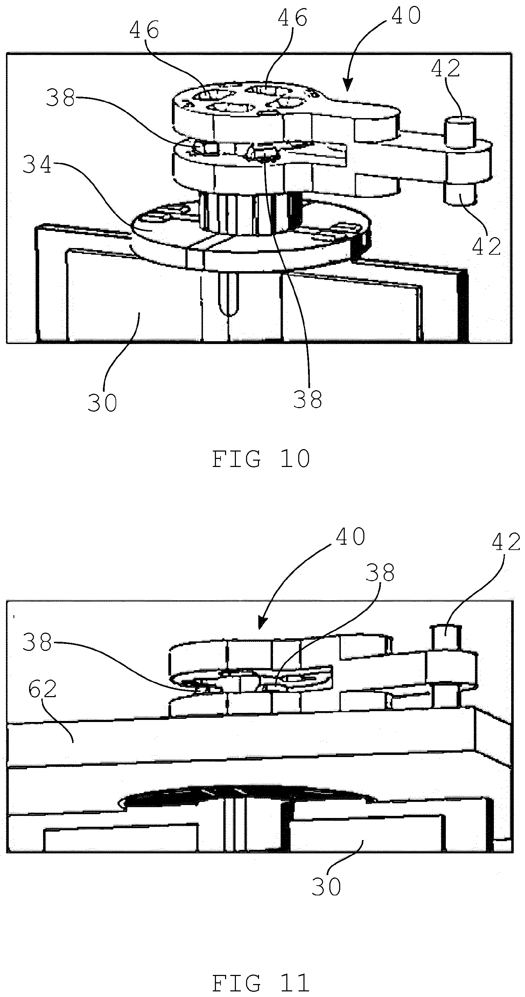

Fig. 10 zeigt eine perspektivische Darstellung der Kopplungsanordnung mit der Lamelle 30 und einem Hebel 40 der ersten Ausführungsform. Fig. 10 zeigt insbesondere die Verbindung zwischen dem Hebel 40 aus Fig. 7 und der Lamelle 30 aus Fig. 9. Der Hebel 40 weist in dieser Verbindung eine Auslenkungen um 0° zur Lamelle 30 auf. Hierzu ragen die Rastarme 38 durch die Öffnungen 48 auf der unteren Seite des Hebels 40.

Die Rastarme 38 ermöglichen einen Toleranzausgleich aufgrund der federnden Ausführung sowohl radial als auch in Achsrichtung der Schwenkachse S der Lamelle 30. Der Hebel 40 wird über die Rastarme 38 in der verrasteten Stellung über die Rastarme 38 gegen die Auflagefläche 68 gedrückt. Dadurch erfolgt der Toleranzausgleich in Richtung der Schwenkachse S. Über die gefederte Lagerung der Rastarme 38 wird zugleich ein Toleranzausgleich in radialer Richtung erzielt, wobei die Rastarme 38 nach außen, von der Schwenkachse S weg drücken.

Fig. 11 zeigt eine weitere perspektivische Darstellung der Kopplungsanordnung von Fig. 10. Hier ist zusätzlich die Gehäusewand 62 gezeigt, wobei der Lagerteller 34 in der Lageröffnung 64 aufgenommen ist. Das Lagerteil 32 ragt durch die Öffnungen 66 in der Gehäusewand 62 hindurch. Auf der Auflagefläche 68 kommt lediglich die Unterseite des Hebels 40 in Anlage.

Fig. 12 zeigt schematische Darstellungen einer Kopplungsanordnung sowie der Anordnung und Ausrichtung eines Hebels 40 der ersten Ausführungsform relativ zu einem Lagerteil 32 bzw. zu einer Lamelle 30. Über die Öffnungen 46 und 48 auf den beiden Seiten des Hebels 40 können für diese Ausführungsform beispielsweise 8 Ausrichtungen erreicht werden. Auf jeder Seite des Hebels 40 sind demnach 4 Stellungen möglich. Die linke Seite von Fig. 12 zeigt die Ausrichtung für eine erste Gruppe von Öffnungen 46 und die rechte Seite zeigt die Ausrichtung für eine zweite Gruppe von Öffnungen 48.

Die gezeigte Ausführung der Kopplungsanordnung weist Robustheit gegenüber Überlast durch Stabilisierung/Versteifung mit dem Hebel 40 auf. Der Hebel 40 selbst ist in 8 verschiedenen Positionen um jeweils 45° gedreht montierbar.

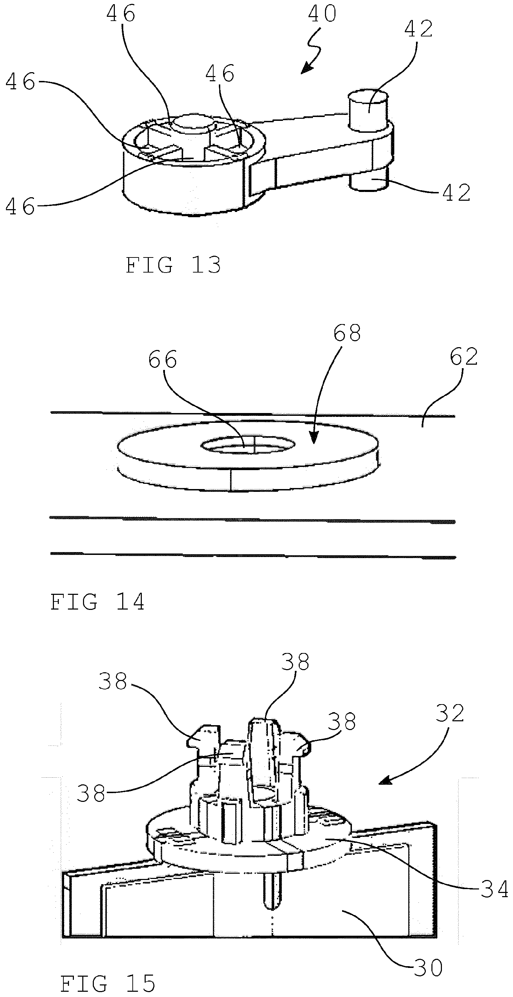

Fig. 13 zeigt eine perspektivische Darstellung eines Hebels 40 einer erfindungsgemäßen Kopplungsanordnung einer zweiten Ausführungsform ("Variante 2"). Der Hebel 40 weist wie bereits für die erste Ausführungsform angegeben, zwei Koppelzapfen 42 auf, die sich gegenüberliegen und eine gemeinsame Mittelachse aufweisen. Der Hebel 40 kann ferner wie der Hebel 40 der ersten Ausführungsform von beiden Seiten her mit einem Lagerteil 32 einer Lamelle 30 verbunden werden. Hierzu weist der Hebel 40 der zweiten Ausführungsform Öffnungen 46 auf, die sich konzentrisch zu einem Mittelabschnitt erstrecken, der durch die Schwenkachse S der Lamelle 30 läuft. Für die 8 verschiedenen Ausrichtungen des Hebels 40 relativ zur Lamelle 30 wird der Hebel um 180° um die Y-Achse gedreht bzw. entweder von einer Oberseite oder von einer Unterseite her mit den Rastarmen 38 eines Lagerteil 32 einer Lamelle 30 verbunden. Der Hebel 40 ist dadurch einfacher ausgebildet als der Hebel 40 der ersten Ausführungsform, da nur 4 Öffnungen 46 vorgesehen sein müssen. Die Öffnungen 46 erstrecken sich durch den Hebel 40 im Verbindungsabschnitt hindurch.

Fig. 14 zeigt ebenfalls eine perspektivische Darstellung einer Gehäusewand 62 mit einer Auflagefläche 68. Wie bereits für die erste Ausführungsform unter Fig. 8 beschrieben, liegt eine Seite des Hebels 40 im montierten Zustand mit dem Lagerteil 32 auf der Auflagefläche 68 auf.

Fig. 15 zeigt eine perspektivische Darstellung einer Lamelle 30 mit einem Lagerteil 32, welches im Wesentlichen identisch zu dem Lagerteil 32 und der Lamelle 30 aus Fig. 9 ausgebildet ist. Auch dieses Lagerteil 32 weist Rastarme 38 auf. Diese sind ebenfalls gefedert ausgeführt und ermöglichen damit einen Toleranzausgleich sowohl in Richtung der Schwenkachse S der Lamelle 30 als auch in radialer Erstreckung hierzu. Der Hebel 40 ist analog zur ersten Ausführungsform in 8 Positionen um jeweils 45° gedreht montierbar, wobei hierzu der Hebel 40 entweder von der Unterseite oder von der Oberseite her mit den Rastarmen 38 eines Lagerteils 32 verbunden werden kann.

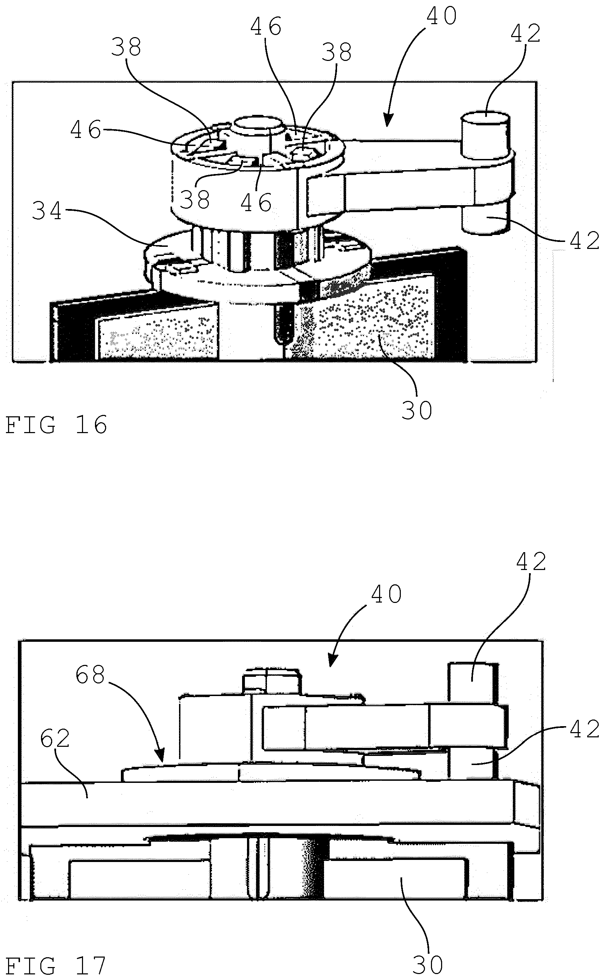

Die Fig. 16 und 17 zeigen perspektivische Darstellungen der Kopplungsanordnung mit einer Lamelle 30 und einem Hebel 40 der zweiten Ausführungsform. Der Hebel 40 liegt hierbei auf der Auflagefläche 68 auf und der Lagerteil 32 ist durch die Öffnung 66 in der Gehäusemann 62 geführt. Der Lagerteller 34 ist in einer Lageröffnung 64 drehbar gelagert und schließt bündig mit der Innenseite der Gehäusewand 62 vom Luftkanal her ab. Die Erhöhung im Bereich der Auflagefläche 68 ermöglicht zudem einen Höhenausgleich für die Koppelzapfen 42. Dies ermöglicht es, einen Mitnehmer 52 beispielsweise mit einem unteren Koppelzapfen 42 zu verbinden.

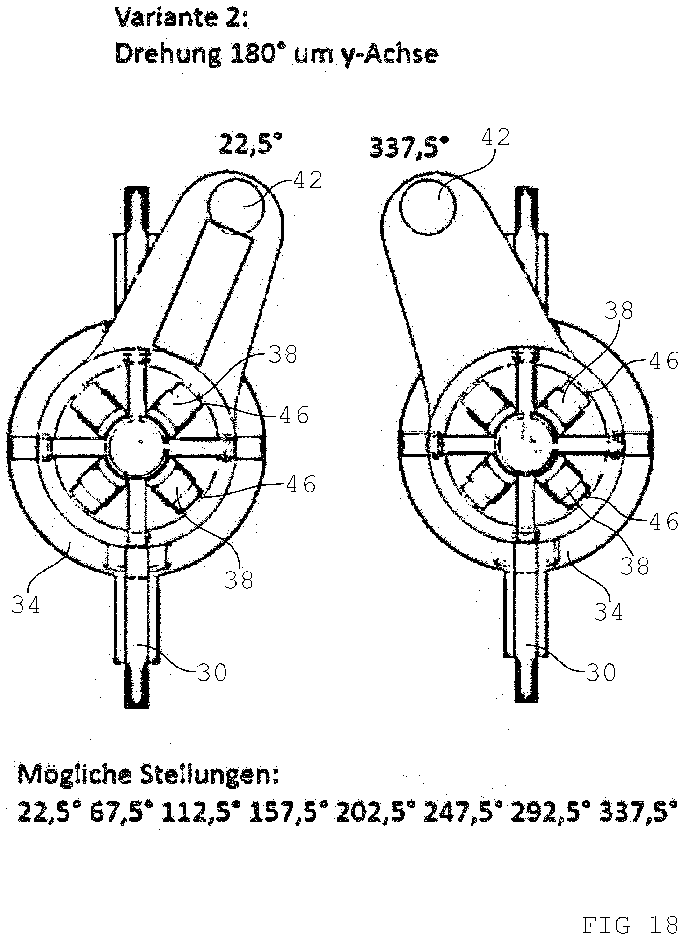

Fig. 18 zeigt schematische Darstellungen einer Kopplungsanordnung sowie der Anordnung und Ausrichtung eines Hebels 40 der zweiten Ausführungsform relativ zu einem Lagerteil 32 bzw. zu einer Lamelle 30. Über die Öffnungen 46, die durch den Verbindungsabschnitt des Hebels 40 verlaufen, können 8 verschiedene Ausrichtungen erreicht werden. Auf jeder Seite des Hebels 40 sind 4 Stellungen möglich. Die linke Seite von Fig. 18 zeigt die Ausrichtung des Hebels 40 von einer ersten Seite des Hebels 40 aus und die rechte Seite von Fig. 18 zeigt die Ausrichtung des Hebels 40 von einer zweiten Seite des Hebels 40 aus. Die Gradzahlen der möglichen Abweichungen zu der Lamelle 30 sind in Fig. 18 angegeben.

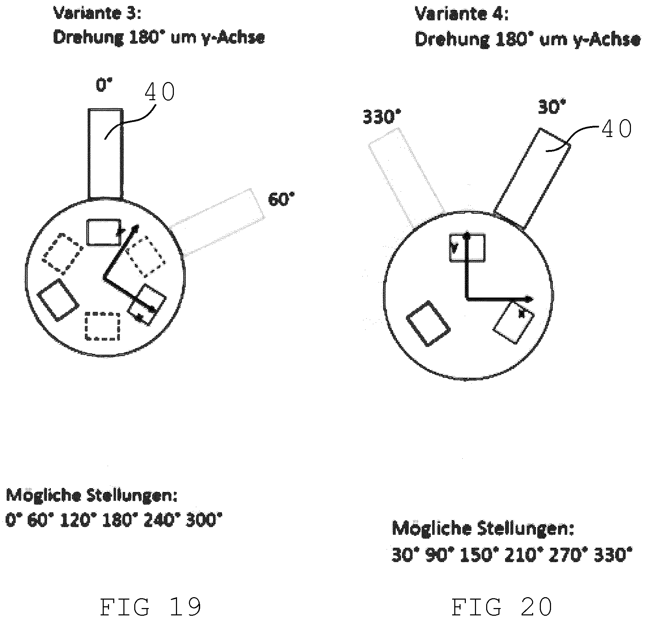

Fig. 19 zeigt eine schematische Darstellung der Ausrichtung eines Hebels 40 einer gattungsgemäßen Kopplungsanordnung einer dritten Ausführungsform ("Variante 3") relativ zu einer Lamelle 30. Die Lamelle 30 erstreckt sich in der 0°-Ausrichtung des Hebels 40 von Fig. 19. In dieser Ausführungsform sind 3 Öffnungen für den Hebel 40 vorgesehen. Entsprechend kann dann ein korrespondierendes Lagerteil 32 3 Rastarme 38 aufweisen. Der Hebel 40 kann analog zu den Varianten 1 und 2 von beiden Seiten her jeweils Verbindungseinrichtungen in Form von Öffnungen aufweisen, sodass durch ein Drehen des Hebels 40 insgesamt 6 Ausrichtungen erreicht werden können. Hierzu weist der Hebel 40 auf jeder Seite 3 mögliche Stellungen für die Rastarme 38 und Ausrichtungen zur Lamelle 30 auf.

Fig. 20 zeigt eine schematische Darstellung der Ausrichtung eines Hebels 40 einer gattungsgemäßen Kopplungsanordnung einer vierten Ausführungsform ("Variante 4") relativ zu einer Lamelle 30. Die vierte Ausführungsform unterscheidet sich von der dritten Ausführungsform dadurch, dass der abstehende Teil des Hebels 40 eine andere Ausrichtung gegenüber den 3 Öffnungen des Hebels 40 aufweist. In der dritten Ausführungsform erstreckt sich eine Öffnung als Verlängerung des abstehenden Teils des Hebels 40. In der vierten Ausführungsform ist der abstehende Teil des Hebels 40 versetzt zu den Öffnungen ausgebildet. Dadurch ergeben sich weitere Stellungen des Hebels 40 relativ zur Lamelle 30. Die möglichen Stellungen sind in Fig. 20 angegeben.

Der Hebel 40 weist analog zu der zweiten Ausführung den Verbindungsabschnitt des Hebels 40 durchdringende Öffnungen auf. Daher lassen sich bei 3 Rastarmen 38 und 3 Öffnungen des Hebels 40 6 verschiedene Ausrichtungen zu einer Lamelle 30 einstellen, wobei hierzu der Hebel 40 entweder von einer Unterseite her oder von einer Oberseite her mit den Rastarmen 38 verbunden wird. Ein korrespondierendes Lagerteil 32 einer Lamelle 30 weist hierzu beispielsweise 3 gefederte Rastarme 38 auf.

### Bezugszeichenliste

- 10: Lamellenanordnung
- 12: Lamelle
- 14: Gabel
- 16: Mulde
- 18: Koppelstange
- 20: Lamellenanordnung
- 30: Lamelle
- 32: Lagerteil
- 34: Lagerteller
- 36: Lagerzapfen
- 38: Rastarme
- 40: Hebel
- 42: Koppelzapfen
- 44: Öffnung
- 46: Öffnung
- 48: Öffnung
- 50: erster Mitnehmer
- 52: zweiter Mitnehmer
- 60: Gehäuse
- 62: Gehäusewand
- 64: Lageröffnung
- 66: Öffnung
- 68: Auflagefläche
- 100: Luftausströmer
- S: Schwenkachse

## Patentansprüche

1. Kopplungsanordnung zwischen einem Luftleitelement und einer Antriebseinrichtung, mindestens aufweisend ein Luftleitelement und mindestens einen Hebel (40), wobei
- das Luftleitelement mindestens ein Lagerteil (32) aufweist, über welches das Luftleitelement mit mindestens einem Hebel (40) verbunden ist,
- der mindestens eine Hebel (40) und das mindestens eine Lagerteil (32) des Luftleitelements Verbindungseinrichtungen aufweisen,
- die Verbindungseinrichtungen des mindestens einen Lagerteils (32) und des mindestens einen Hebels (40) Stifte oder Rastarme (38) und korrespondierende Öffnungen (46, 48) und/oder korrespondierende Profile aufweisen,
**dadurch gekennzeichnet, dass**
- die Verbindungseinrichtungen des Hebels (40) auf jeweils gegenüberliegenden Seiten des Hebels (40) angeordnet sind, wobei auf einer Seite des Hebels (40) mindestens zwei Öffnungen (46) oder mindestens zwei Stifte oder mindestens zwei Rastarme gegenüberliegend und konzentrisch zu einer Schwenkachse (S) des Luftleitelements angeordnet sind und auf der gegenüberliegenden Seite des Hebels (40) wiederrum mindestens zwei Öffnungen (48) oder mindestens zwei Stifte oder mindestens zwei Rastarme vorgesehen sind, wobei diese zu den Öffnungen (46) oder Stiften oder Rastarmen auf der anderen Seite um 45° versetzt sind,
- die Ausrichtung des mindestens einen Hebels (40) zu dem mindestens einem Lagerteil (32) des Luftleitelements bei Montage über die Verbindungseinrichtungen einstellbar ist.

2. Kopplungsanordnung nach Anspruch 1, wobei das Luftleitelement mindestens einen Lagerteller (34) und der mindestens eine Lagerteller (34) mindestens einen exzentrisch zur Schwenkachse (S) des Luftleitelements angeordneten Lagerzapfen (36) aufweist.

3. Kopplungsanordnung nach Anspruch 1 oder 2, wobei Luftleitflächen des Luftleitelements in Bezug auf die Schwenkachse (S) des Luftleitelements symmetrisch ausgebildet sind.

4. Kopplungsanordnung nach Anspruch 2 oder 3, wobei der mindestens eine Hebel (40) zur Quererstreckung des Luftleitelements, orthogonal zur Schwenkachse (S), verdreht ausgerichtet ist.

5. Luftausströmer (100), mindestens aufweisend ein Gehäuse (60) mit einer Lufteintrittsöffnung und einer Luftaustrittsöffnung, wobei zwischen der Lufteintrittsöffnung und der Luftaustrittsöffnung ein Luftkanal definiert ist, und eine Lamellenanordnung (20) mindestens zur Luftablenkung mit mehreren Luftleitelementen, wobei
- die Lamellenanordnung (20) mehrere Lamellen (30) als Luftleitelemente aufweist, die um parallele Schwenkachsen (S) verschwenkbar im Luftkanal über das Gehäuse (60) gelagert sind, und
- mindestens eine Lamelle (30) ein Lagerteil (32) aufweist, über welches die mindestens eine Lamelle (30) mit einem Hebel (40) verbunden ist, wobei der Hebel (40) mit einer Antriebseinrichtung verbindbar ist,
- das Lagerteil (32) außerhalb des Luftkanals angeordnet ist, und der Hebel (40) und das Lagerteil (32) der mindestens einen Lamelle (30) Verbindungseinrichtungen aufweisen, wobei die Verbindungseinrichtungen des Lagerteils (32) und des Hebels (40) Stifte oder Rastarme (38) und korrespondierende Öffnungen (46, 48) und/oder korrespondierende Profile aufweisen,
- die Verbindungseinrichtungen des Hebels (40) auf jeweils gegenüberliegenden Seiten des Hebels (40) angeordnet sind, wobei auf einer Seite des Hebels (40) mindestens zwei Öffnungen (46) oder mindestens zwei Stifte oder mindestens zwei Rastarme gegenüberliegend und konzentrisch zu einer Schwenkachse (S) der mindestens einen Lamelle (30) angeordnet sind und auf der gegenüberliegenden Seite des Hebels (40) wiederrum mindestens zwei Öffnungen (48) oder mindestens zwei Stifte oder mindestens zwei Rastarme vorgesehen sind, wobei diese zu den Öffnungen (46) oder Stiften oder Rastarmen auf der anderen Seite um 45° versetzt sind,
- die Ausrichtung des Hebels (40) zu dem Lagerteil (32) der mindestens einen Lamelle (30) bei Montage über die Verbindungseinrichtungen einstellbar ist.

6. Luftausströmer (100) nach Anspruch 5, wobei mehrere Lamellen (30) ein Lagerteil (32) aufweisen.

7. Luftausströmer (100) nach Anspruch 6, wobei die Lamellen (30) einen Lagerteller (34) und die Lagerteller (34) einen exzentrisch zur Schwenkachse (S) der Lamellen (30) angeordneten Lagerzapfen (36) aufweisen, wobei die Lagerzapfen (36) der Lagerteller (34) mit einem ersten Mitnehmer (50) verbunden sind.

8. Luftausströmer (100) nach Anspruch 5, wobei mehrere Lamellen (30) ein Lagerteil (32) aufweisen, das mit einem Hebel (40) verbunden ist, und die Hebel (40) an exzentrisch zu den Schwenkachsen (S) der Lamellen (30) befindlichen Abschnitten mit einem zweiten Mitnehmer (52) verbunden sind.

9. Luftausströmer (100) nach Anspruch 7, wobei der Lagerteller (34) in einer korrespondierenden Lageröffnung (64) in einer Gehäusewand (62) des Gehäuses (60) aufgenommen und der erste Mitnehmer (50) zwischen dem Lagerteller (34) und dem Gehäuse (60) angeordnet ist.

10. Luftausströmer (100) nach einem der Ansprüche 5 bis 9, wobei die Lamellen (30) soweit verschwenkbar sind, dass diese für eine Luftmengenregulierung in Anlage bringbar sind.

## Claims

1. Coupling arrangement between an air guide element and a drive device, at least having an air guide element and at least one lever (40), wherein
- the air guide element has at least one bearing part (32), via which the air guide element is connected to at least one lever (40),
- the at least one lever (40) and the at least one bearing part (32) of the air guide element have connection devices,
- the connection devices of the at least one bearing part (32) and the at least one lever (40) have pins or locking arms (38) and corresponding openings (46, 48) and/or corresponding profiles,
**characterised in that**
- the connection devices of the lever (40) are arranged on respectively opposite sides of the lever (40), wherein on one side of the lever (40), at least two openings (46) or at least two pins or at least two locking arms are arranged opposite one another and concentrically with respect to a pivot axis (S) of the air guide element, and on the opposite side of the lever (40), in turn at least two openings (48) or at least two pins or at least two locking arms (30) are provided, wherein these are offset by 45° with respect to the openings (46) or pins or locking arms (30) on the other side,
- the orientation of the at least one lever (40) with respect to the at least one bearing part (32) of the air guide element can be adjusted via the connection devices during assembly.

2. Coupling arrangement according to claim 1, wherein the air guide element has at least one bearing plate (34) and the at least one bearing plate (34) has at least one bearing journal (36) arranged eccentrically with respect to the pivot axis (S) of the air guide element.

3. Coupling arrangement according to claim 1 or 2, wherein air guide surfaces of the air guide element are formed symmetrically in relation to the pivot axis (S) of the air guide element.

4. Coupling arrangement according to claim 2 or 3, wherein the at least one lever (40) is oriented twisted with respect to the transverse extension of the air guide element, orthogonal to the pivot axis (S).

5. Air outlet (100), at least having a housing (60) with an air inlet opening and an air outlet opening, wherein an air duct is defined between the air inlet opening and the air outlet opening, and a louvre arrangement (20) at least for air deflection having a plurality of air guide elements, wherein
- the louvre arrangement (20) has a plurality of louvres (30) as air guide elements, which are mounted in the air duct via the housing (60) so as to be pivotable about parallel pivot axes (S), and
- at least one louvre (30) has a bearing part (32), via which the at least one louvre (30) is connected to a lever (40), wherein the lever (40) can be connected to a drive device,
- the bearing part (32) is arranged outside the air duct, and the lever (40) and the bearing part (32) of the at least one louvre (30) have connection devices, wherein the connection devices of the bearing part (32) and of the lever (40) have pins or locking arms (38) and corresponding openings (46, 48) and/or corresponding profiles,
- the connection devices of the lever (40) are arranged on respectively opposite sides of the lever (40), wherein on one side of the lever (40), at least two openings (46) or at least two pins or at least two locking arms are arranged opposite one another and concentrically with respect to a pivot axis (S) of the at least one louvre (30), and on the opposite side of the lever (40), in turn at least two openings (48) or at least two pins or at least two locking arms are provided, wherein these are offset by 45° with respect to the openings (46) or pins or locking arms on the other side,
- the orientation of the lever (40) with respect to the bearing part (30) of the at least one louvre (30) can be adjusted via the connection devices during assembly.

6. Air outlet (100) according to claim 5, wherein a plurality of louvres (30) have a bearing part (32).

7. Air outlet (100) according to claim 6, wherein the louvres (30) have a bearing plate (34) and the bearing plates (34) have a bearing journal (36) arranged eccentrically with respect to the pivot axis (S) of the louvres (30), wherein the bearing journals (36) of the bearing plates (34) are connected to a first driver (50).

8. Air outlet (100) according to claim 2, wherein a plurality of louvres (30) have a bearing part (32), which is connected to a lever (40), and the levers (40) are connected to a second driver (52) at sections located eccentrically with respect to the pivot axes (S) of the louvres (30).

9. Air outlet (100) according to claim 7, wherein the bearing plate (34) is accommodated in a corresponding bearing opening (64) in a housing wall (62) of the housing (60), and the first driver (50) is arranged between the bearing plate (34) and the housing (60).

10. Air outlet (100) according to one of claims 5 to 9, wherein the louvres (30) can be pivoted to such an extent that they can be brought into contact for air flow regulation.

## Revendications

1. Agencement de couplage entre un élément de guidage d'air et un dispositif d'entraînement, comportant au moins un élément de guidage d'air et au moins un levier (40), dans lequel
- l'élément de guidage d'air comporte au moins une partie d'appui (32) par l'intermédiaire de laquelle l'élément de guidage d'air est relié audit au moins un levier (40),
- ledit au moins un levier (40) et ladite au moins une partie d'appui (32) de l'élément de guidage d'air comportent des dispositifs de liaison,
- les dispositifs de liaison de ladite au moins une partie d'appui (32) et dudit au moins un levier (40) comportent des broches ou des bras d'enclenchement (38) et des ouvertures (46, 48) correspondantes et/ou des profils correspondants,
**caractérisé en ce que**
- les dispositifs de liaison du levier (40) sont agencés sur des côtés respectivement opposés du levier (40), dans lequel au moins deux ouvertures (46) ou au moins deux broches ou au moins deux bras d'enclenchement sont agencés d'un côté du levier (40) de manière opposée et concentrique par rapport à un axe de pivotement (S) de l'élément de guidage d'air, et au moins deux ouvertures (48) ou au moins deux broches ou au moins deux bras d'enclenchement sont prévus encore du côté opposé du levier (40), dans lequel ceux-ci sont décalés de 45° par rapport aux ouvertures (46) ou aux broches ou aux bras d'enclenchement de l'autre côté,
- l'orientation dudit au moins un levier (40) par rapport à ladite au moins une partie d'appui (32) de l'élément de guidage d'air peut être réglée lors du montage via les dispositifs de liaison.

2. Agencement de couplage selon la revendication 1, dans lequel l'élément de guidage d'air comporte au moins un disque d'appui (34) et ledit au moins un disque d'appui (34) comporte au moins un tourillon (36) agencé de manière excentrée par rapport à l'axe de pivotement (S) de l'élément de guidage d'air.

3. Agencement de couplage selon la revendication 1 ou 2, dans lequel des surfaces de guidage d'air de l'élément de guidage d'air sont formées de manière symétrique par rapport à l'axe de pivotement (S) de l'élément de guidage d'air.

4. Agencement de couplage selon les revendications 2 ou 3, dans lequel ledit au moins un levier (40) est orienté avec torsion par rapport à l'extension transversale de l'élément de guidage d'air, orthogonalement à l'axe de pivotement (S).

5. Diffuseur d'air (100), comportant au moins un boîtier (60) ayant une ouverture d'entrée d'air et une ouverture de sortie d'air, dans lequel un canal d'air est défini entre l'ouverture d'entrée d'air et l'ouverture de sortie d'air, et un ensemble de lamelles (20) au moins pour la déviation d'air avec plusieurs éléments de guidage d'air, dans lequel
- l'ensemble de lamelles (20) comporte plusieurs lamelles (30) en tant qu'éléments de guidage d'air, qui sont montées de façon à pouvoir pivoter autour d'axes de pivotement parallèles (S) dans le canal d'air via le boîtier (60), et
- au moins une lamelle (30) comporte une partie d'appui (32) par l'intermédiaire de laquelle ladite au moins une lamelle (30) est reliée à un levier (40), dans lequel le levier (40) peut être relié à un dispositif d'entraînement,
- la partie d'appui (32) est agencée à l'extérieur du canal d'air, et le levier (40) et la partie d'appui (32) de ladite au moins une lamelle (30) comportent des dispositifs de liaison, dans lequel les dispositifs de liaison de la partie d'appui (32) et du levier (40) comportent des broches ou des bras d'enclenchement (38) et des ouvertures (46, 48) correspondantes et/ou des profils correspondants,
- les dispositifs de liaison du levier (40) sont agencés sur des côtés respectivement opposés du levier (40), dans lequel au moins deux ouvertures (46) ou au moins deux broches ou au moins deux bras d'enclenchement sont agencés d'un côté du levier (40) de manière opposée et concentrique à un axe de pivotement (S) de ladite au moins une lamelle (30), et au moins deux ouvertures (48) ou au moins deux broches ou au moins deux bras d'enclenchement sont prévus encore du côté opposé du levier (40), dans lequel ceux-ci sont décalés de 45° par rapport aux ouvertures (46) ou aux broches ou aux bras d'enclenchement de l'autre côté,
- l'orientation du levier (40) par rapport à la partie d'appui (32) de ladite au moins une lamelle (30) peut être réglée lors du montage via les dispositifs de liaison.

6. Diffuseur d'air (100) selon la revendication 5, dans lequel plusieurs lamelles (30) comportent une partie d'appui (32).

7. Diffuseur d'air (100) selon la revendication 6, dans lequel les lamelles (30) comportent un disque d'appui (34) et le disque d'appui (34) comporte un tourillon (36) agencé de manière excentrée par rapport à l'axe de pivotement (S) des lamelles (30), dans lequel les tourillons (36) du disque d'appui (34) sont reliés à un premier élément d'entraînement (50).

8. Diffuseur d'air (100) selon la revendication 5, dans lequel plusieurs lamelles (30) comportent une partie d'appui (32) qui est reliée à un levier (40), et les leviers (40) sont reliés à un second élément d'entraînement (52) sur des parties excentrées par rapport aux axes de pivotement (S) des lamelles (30).

9. Diffuseur d'air (100) selon la revendication 7, dans lequel le disque d'appui (34) est logé dans une ouverture d'appui (64) correspondante dans une paroi de boîtier (62) du boîtier (60) et le premier élément d'entraînement (50) est agencé entre le disque d'appui (34) et le boîtier (60).

10. Diffuseur d'air (100) selon l'une des revendications 5 à 9, dans lequel les lamelles (30) peuvent pivoter de telle sorte que celles-ci peuvent venir en butée pour un réglage de débit d'air.
